# EUROPEAN PATENT APPLICATION

(11) **EP 1 855 169 A2**
(43) Date of publication of application: **14.11.2007**
(21) Application number: 07106714.4
(22) Date of filing: 23.04.2007
(51) Int. Cl.: G04G 9/00

(54) **Watch-Type Mobile Terminal**

(30) Priority: 10.05.2006 KR 20060042115
(71) Applicant: Samsung Electronics Co., Ltd., Suwon-si Gyeonggi-do (KR)
(72) Inventor: Kim, Hyun-Soo, Gyeonggi-do (KR); Chong, Seung-Eun, Gyeonggi-do (KR); Park, Jung-Hun, Gyeonggi-do (KR); Kwon, Kyung-Tack, Gyeonggi-do (KR)
(74) Representative: Zimmer, Franz-Josef

(57) **Abstract**

A watch-type mobile terminal (10,20,30) adopting an analog clock operating with hour/minute hands (11,22,32). The watch-type mobile terminal (10,20,30) has a Liquid Crystal Display (LCD) (2,21,31) and includes hour/minute hands (11,22,32) for surrounding an outer circumference of the LCD (11,22,32) and rotating with respect to a rotation axis (A1) along the outer circumference of the LCD (11,22,32) and a movement device (12,23,33) for providing the rotation axis (A1) through a center and rotating the hour/minute hands (11,22,32).

## Description

### BACKGROUND OF THE INVENTION

### 1. Field of the Invention

The present invention generally relates to a watch-type mobile terminal adopting an analog clock operating with the hour hand and the minute hand.

### 2. Description of the Related Art

In general, mobile terminals keep pace with compactness and slimness of electronic parts. Bar-type mobile terminals as 1^{st} generation and flip-type mobile terminals as 2^{nd} generation have come into wise use. At present, flip-type mobile terminals and folder-type mobile terminals as 3^{rd} generation are generally used together.

Watch-type mobile terminals that are wearable on users' bodies or wrists have also been developed.

A watch-type mobile terminal, because of being worn on a user's body or wrist, has improved portability and prevents a risk of loss or destruction due to dropping or shock caused by a careless mistake during use.

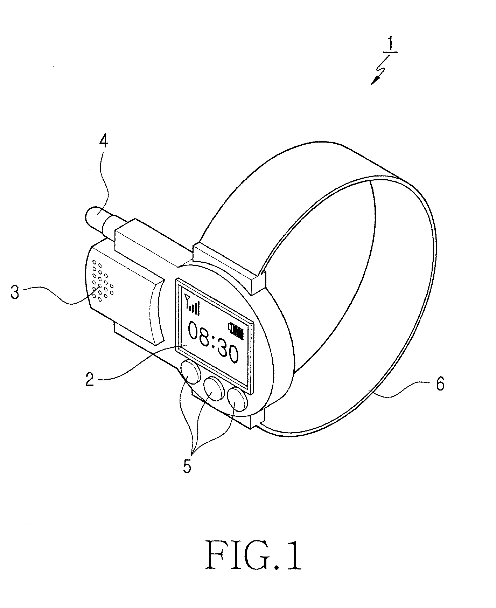

As shown in FIG. 1, a conventional watch-type mobile terminal 1 includes a Liquid Crystal Display (LCD) 2, a speaker 3, a microphone (not shown), an antenna 4, and a battery pack (not shown). A main body of the watch-type mobile terminal 1 includes a plurality of key pads 5 and a band 6.

The conventional watch-type mobile terminal 1 informs a user of a phone function, various application functions, time, and a battery remaining capacity through the LCD 2. The conventional watch-type mobile terminal 1 uses corresponding electric circuits to implement these functions and adopts a digital manner to display time in which time is expressed with numbers, unlike an analog manner in which time is expressed with an hour hand and a minute hand.

However, since the conventional watch-type mobile terminal takes the form of a digital wristwatch, it just gives out the feel of a convenient digital device instead of the deluxe image of an analog clock.

Moreover, the amount of time during which the conventional watch-type mobile terminal can be used is limited according to power consumption. As a result, the LCD of the watch-type mobile terminal is turned off when power is not supplied and thus, the user cannot be provided with time information.

### SUMMARY OF THE INVENTION

It is, therefore, an object of the present invention to provide a watch-type mobile terminal having a deluxe and elegant design by adopting an analog clock operating the hour hand and the minute hand.

This object is solved by the subject matter of the independent claims. Preferred embodiments are defined in the dependent claims.

It is another purpose of the present invention to provide a watch-type mobile terminal adopting an analog clock operating the hour hand and the minute hand, in which the analog clock can operate without separate power supply during power interruption and thus provide time information to a user all the time unlike a digital clock that cannot provide the time information to the user due to the turning off of a Liquid Crystal Display (LCD) during power interruption.

According to one aspect of the present invention, there is provided a watch-type mobile terminal having a LCD. The watch-type mobile terminal includes hour/minute hands for surrounding an outer circumference of the LCD and rotating with respect to a rotation axis along the outer circumference of the LCD and a movement device for providing the rotation axis through a center and rotating the hour/minute hands.

According to another aspect of the present invention, there is provided a watch-type mobile terminal including at least one LCD, hour/minute hands for combining with the at least one LCD with a hole on a contact portion with the at least one LCD, and rotating with respect to a rotation axis that passes through the hole, and a movement device for providing the rotation axis through a center and rotating the hour/minute hands.

According to further another aspect of the present invention, there is provided a watch-type mobile terminal including an LCD, hour/minute hands for defining a through-hole through a center of the LCD and rotating with respect to a rotation axis that passes through the through-hole, and a movement device for providing the rotation axis through a center and rotating the hour/minute hands.

### BRIEF DESCRIPTION OF THE DRAWINGS

The above and other objects, features and advantages of the present invention will become more apparent from the following detailed description when taken in conjunction with the accompanying drawings in which:
FIG. 1 is a perspective view of a conventional watch-type mobile terminal during use;
FIG. 2 is a perspective view of a watch-type mobile terminal according to the present invention;
FIG. 3 is a perspective view showing a process of assembling a watch-type mobile terminal according to the present invention;
FIG. 4 is a perspective view showing an assembled state of a watch-type mobile terminal according to the present invention;
FIG. 5 is a plane view showing a use state of a watch-type mobile terminal according to the present invention;
FIG. 6 is an exploded perspective view of a watch-type mobile terminal according to the present invention;
FIG. 7 is a perspective view of a process of assembling a watch-type mobile terminal according to the present invention;
FIG. 8 is a perspective view showing an assembled state of a watch-type mobile terminal according to the present invention;
FIG. 9 is a plane view showing a use state of a watch-type mobile terminal according to the present invention;
FIG. 10 is an exploded perspective view of a watch-type mobile terminal according to the present invention;
FIG. 11 is a perspective view of a process of assembling a watch-type mobile terminal according to the present invention; and
FIG 12 is a plane view showing a use state of a watch-type mobile terminal according to the present invention.

Similar reference characters denote corresponding features consistently throughout the attached drawings.

### DETAILED DESCRIPTION OF THE PREFERRED EMBODIMENTS

Preferred embodiments of the present invention will now be described in detail with reference to the annexed drawings. In the following description, a detailed description of known functions and configurations incorporated herein has been omitted for conciseness.

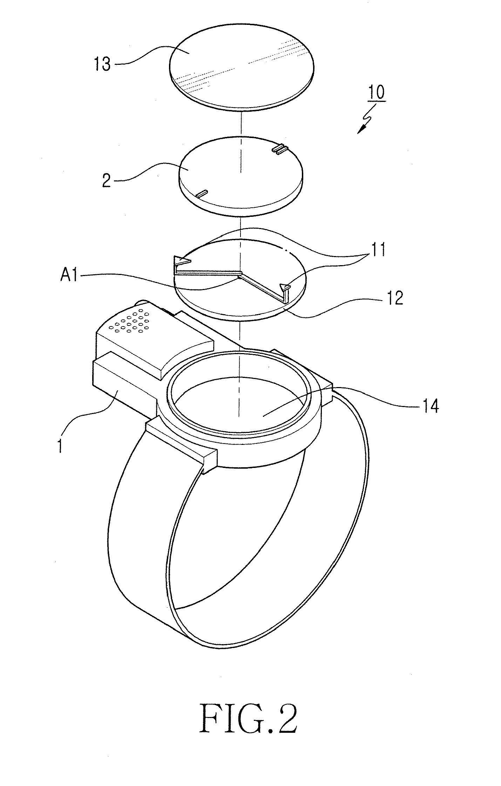

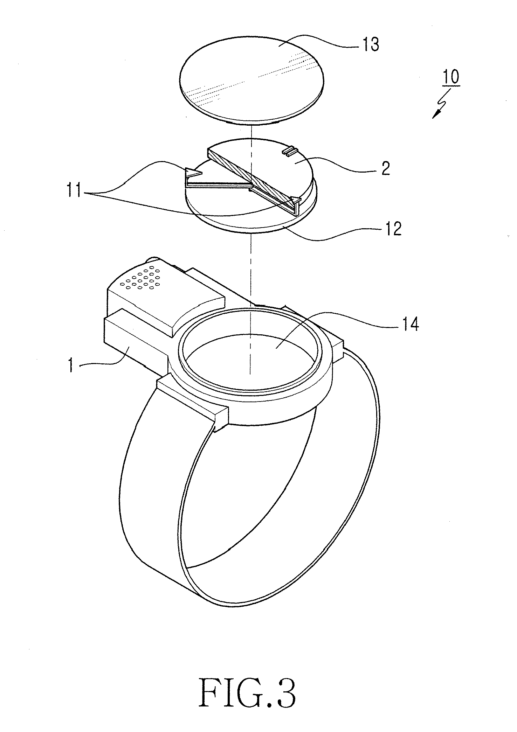

As shown in FIGs. 2 and 3, examples of a watch-type mobile terminal 10 according to the present invention include an LCD 2, hour/minute hands 11, and a movement device 12. The hour/minute hands 11 surrounds an outer circumference of the LCD 2 to rotate with respect to a rotation axis A1, and the movement device 12 provides the rotation axis A1 and is included in a main body 1 of the watch-type mobile terminal 10 to rotate the hour/minute hands 11.

As shown in FIG. 2, a protection glass 13 is provided over the hour/minute hands 11 to protect the LCD 2 and the hour/minute hands 11.

As shown in FIG. 3, the main body 1 includes a mounting groove 14 in which the LCD 2, the hour/minute hands 11, and the movement device 12 can be sequentially mounted.

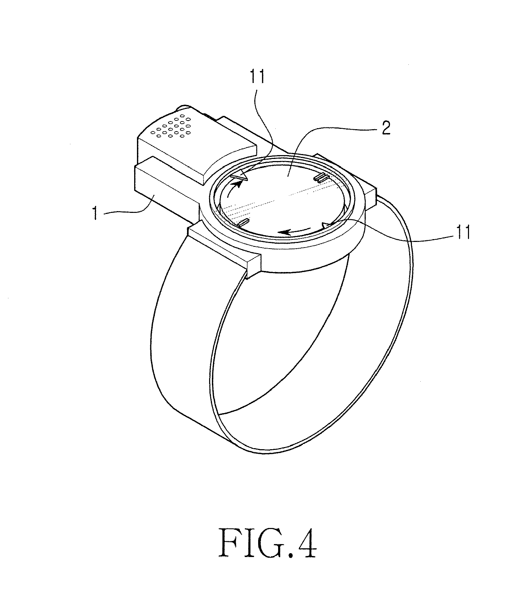

As shown in FIG. 4, characters and symbols indicating time are marked along the outer circumference of the LCD 2.

The operation of the watch-type mobile terminal 10 according to the present invention will be described in more detail with reference to FIGs. 1 through 5.

As shown in FIGs. 2 and 3, in the watch-type mobile terminal 10, the movement device 12, the hour/minute hands 11, and the protection glass 13 are sequentially mounted in the mounting groove 14 of the main body terminal 1.

As shown in FIG. 4, when a user does not use a communication mode function of the watch-type mobile terminal 10, the hour/minute hands 11 rotate with respect to the rotation axis A1 by operation of the movement device 12, thereby informing the user of the time.

The hour/minute hands 11 rotate with respect to the rotation axis A of the movement device 12, thereby information the user of the time in an analog manner. The hour/minute hands 11 rotate along an outer circumference of the LCD 2.

Characters and symbols indicating the time are marked along the outer circumference of the LCD 2 to allow the user to accurately know the time.

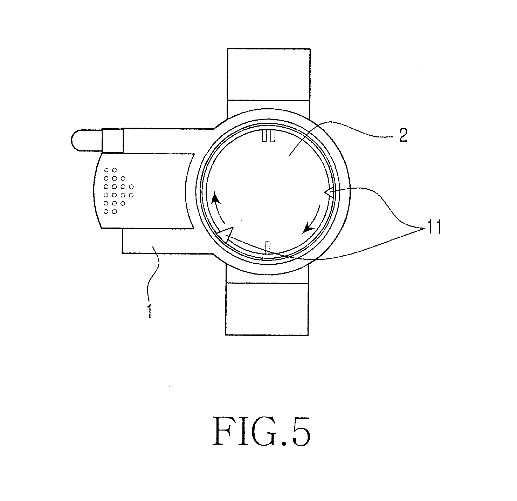

As shown in FIGs. 4 and 5, a user can independently use the LCD 2 when using a communication mode function or other functions of the watch-type mobile terminal 10. In addition, since the hour/minute hands 11 operate independently, a user can check the time when using a communication mode function of the watch-type mobile terminal 10.

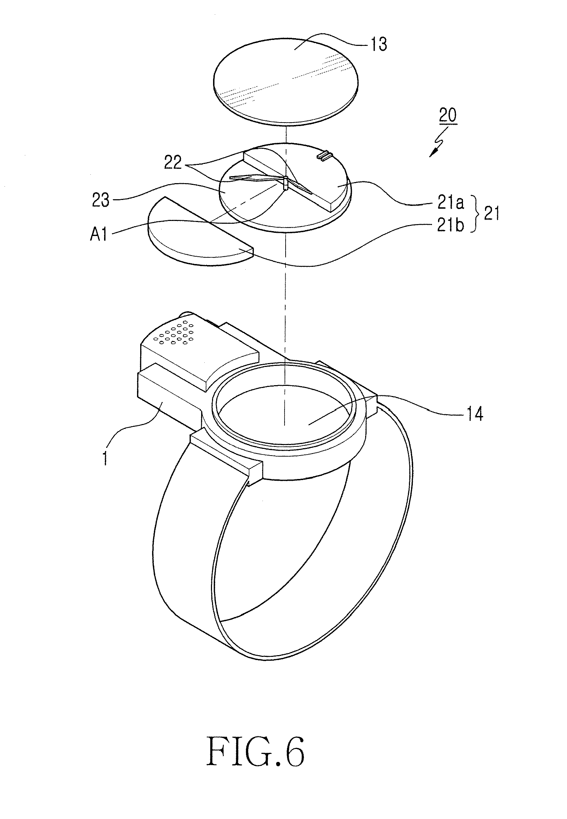

The operation of another example of a watch-type mobile terminal 20 according to the present invention will be described in more detail with reference to FIGs. 6 through 9.

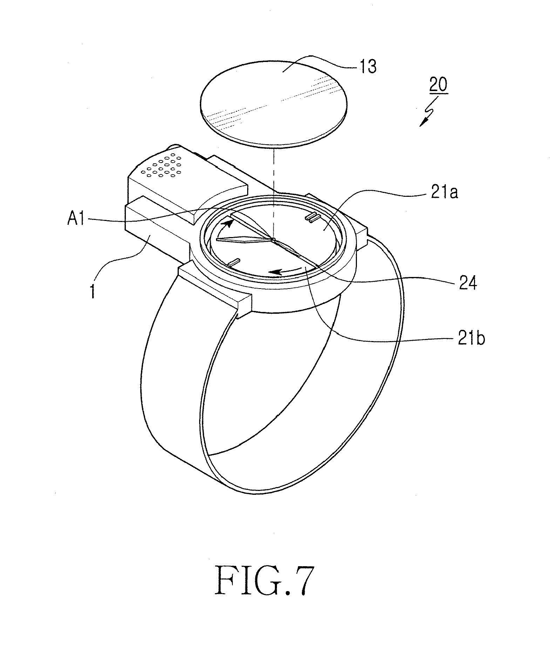

As shown in FIGs. 6 and 7, in the watch-type mobile terminal 20, a movement device 23, hour/minute hands 22, and at least one LCD 21 are mounted in a mounting groove 14 of a main body 1.

Two LCDs (21a, 21b) may be combined in the mounting groove 14 and a hole 24 is provided through center portions of the LCDs (21a, 21b). The hour/minute hands 22 are included on each LCDs (21a, 21b) through hole 24. Each LCDs (21a, 21b) may have a semi-spherical form.

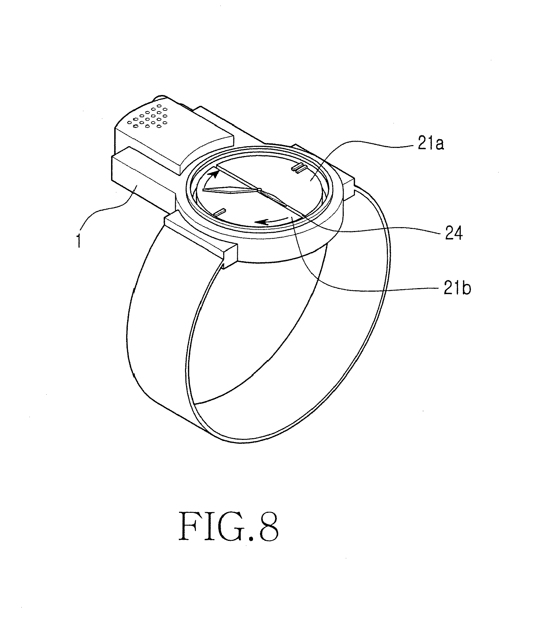

As shown in FIG. 8, when a user does not use the main body 1 for a communication mode function, the hour/minute hands 22 rotate with respect to the rotation axis A1 by operation of the movement device 23 to inform the user of the time. The rotation axis A1 is combined with the hour/minute hands 22 through the hole 24 to allow the rotation of the hour/minute hands 22.

The rotation axis A1 is provided through a center of the movement device 23 and the hour/minute hands 22 rotate about the rotation axis A 1 of the movement device 23 to inform the user of the time in an analog manner. The hour/minute hands 22 rotate on the LCDs (21a, 21b) to inform the user of the time.

Characters and symbols indicating time are marked along an outer circumference of the LCDs (21a, 21b), thereby allowing the user to accurately know the time.

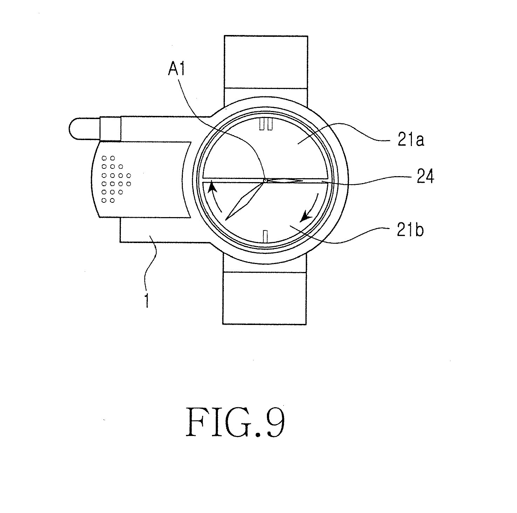

As shown in FIGs. 8 and 9, when using the main body 1 for a communication mode function or other functions, the user can independently use the LCDs (21a, 21b). In addition, the hour/minute hands 11 operate independently, and thus the user can check the time when using the main body 1 for a communication mode function.

Even when power is completely consumed and is not supplied to the main body 1, the LCDs (21a, 21b) is turned off, and the function of the watch-type mobile terminal 20 is stopped, the hour/minute hands 22 operate, thereby providing time information to the user all the time.

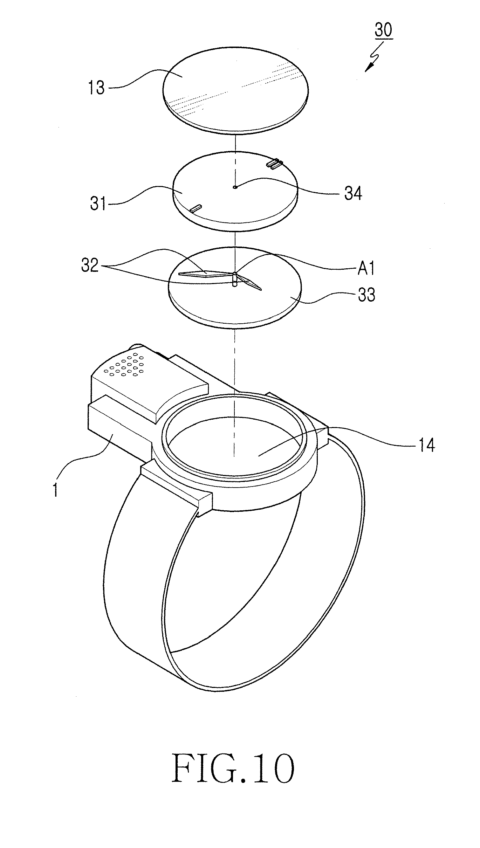

The operation of another example of a watch-type mobile terminal 30 according to a the present invention will be described in more detail with reference to FIGs. 10 through 12.

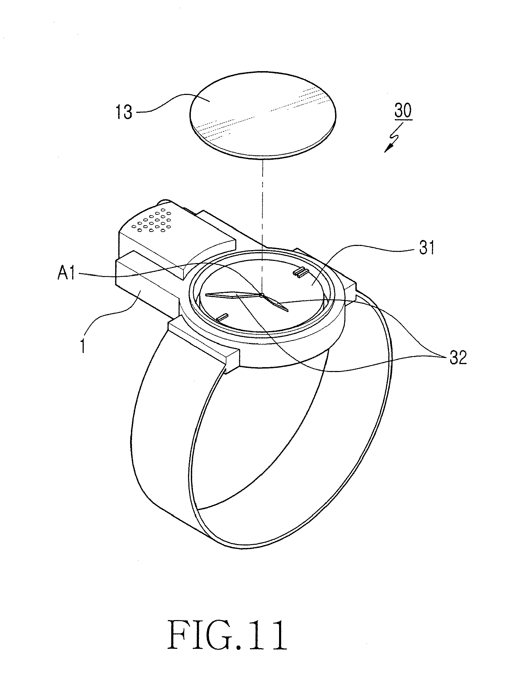

As shown in FIGs. 10 and 11, a movement device 33, hour/minute hands 32, and a disc-type LCD 31 are mounted in a mounting groove 14 formed in a main body 1.

A through-hole 34 is defined through a center of the LCD 31 and a rotation axis A1 of the movement device 33 passes through the through-hole 34 to allow rotation of the hour/minute hands 32.

When a user does not use the main body 1 for a communication-mode function, the hour/minute hands 32 rotate with respect to the rotation axis A1 by operation of the movement device 33, thereby informing the user of the time. The rotation axis A1 is provided through a center of the movement device 33.

The hour/minute hands 32 rotate about the rotation axis A1 of the movement device 33, thereby informing the user of the time in an analog manner. The hour/minute hands 32 rotate on the LCD 31 to inform the user of the time.

Characters and symbols indicating the time are marked along an outer circumference of the LCD 31 to allow the user to accurately know the time.

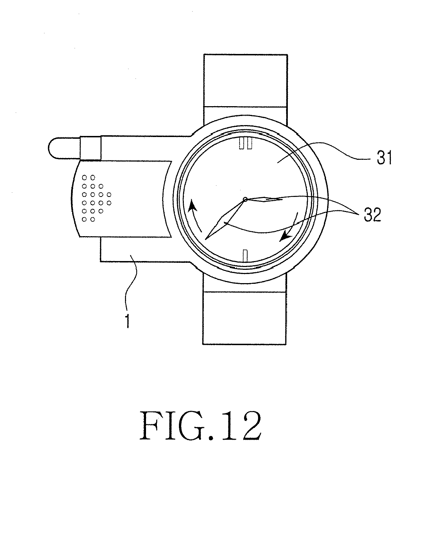

As shown in FIG. 12, when using the main body 1 for a communication mode function or other functions, a user can independently use the LCD 31. In addition, the hour/minute hands 32 operate independently, and thus the user can check the time when using the main body 1 for the communication mode function.

Even when power is completely consumed and is not supplied to the main body 1, the LCD 31 is turned off, and the function of the watch-type mobile terminal 30 is stopped, the hour/minute hands 32 operate, thereby providing time information to the user all the time.

## Claims

1. A watch-type mobile terminal (10,20,30) including a Liquid Crystal Display (LCD) (2,21,31), comprising:
hour/minute hands (11,22,32)for surrounding an outer circumference of the LCD (2,21,31) and rotating with respect to a rotation axis (A1) along the outer circumference of the LCD (2,21,31); and
a movement device (12,23,33) for providing the rotation axis (A1) through a center and rotating the hour/minute hands (11,22,32).

2. The watch-type mobile terminal (10,20,30) of claim 1, wherein a protection glass (13) is provided over the hour/minute hands (11,22,32).

3. The watch-type mobile terminal (10,20,30) of claim 1, wherein a mounting groove (14) in which the LCD (2,21,31), the hour/minute hands (11,22,32), and the movement device (12,23,33) are sequentially mounted is further formed in a main body (1).

4. The watch-type mobile terminal (10,20,30) of claim 1, wherein characters and symbols indicating time are marked along the outer circumference of the LCD (2,21,31).

5. A watch-type mobile terminal (10,20,30) comprising:
at least one Liquid Crystal Display (LCD) (2,21,31);
hour/minute hands (11,22,32) for combining the at least one LCD (2,21,31) with a hole (24) on a contact portion of the at least one LCD, and rotating with respect to a rotation axis (A1) that passes through the hole (24); and
a movement device (12,23,33) for providing the rotation axis (A1) through a center and rotating the hour/minute hands (11,22,32).

6. The watch-type mobile terminal (10,20,30) of claim 5, wherein the at least one LCD (2,21,31) has holes (24) defined therein through which the rotation axis (A1) passes.

7. The watch-type mobile terminal (10,20,30) of claim 5 or 6, wherein the at least one LCD (2,21,31) is divided into upper and lower semi-spherical portions (21a, 21b) with respect to the hole (24).

8. The watch-type mobile terminal (10,20,30) of claim 5, wherein characters and symbols indicating time are marked along the outer circumference of the at least one LCD (2,21,31).

9. A watch-type mobile terminal (10,20,30) comprising:
a Liquid Crystal Display (LCD) (2,21,31);
hour/minute hands (11,22,32) for defining a through-hole (24) through a center of the LCD (2,21,31) and rotating with respect to a rotation axis (A1) that passes through the through-hole (24); and
a movement device (12,23,33) for providing the rotation axis (A1) through a center and rotating the hour/minute hands (11,22,32).
